# EUROPEAN PATENT APPLICATION

(11) **EP 4 607 015 A1**
(43) Date of publication of application: **27.08.2025**
(21) Application number: 25157978.5
(22) Date of filing: 14.02.2025
(51) Int. Cl.: F02C 9/20, F02K 1/06, F02K 5/00

(54) **HYBRID-ELECTRIC GAS TURBINE ENGINE AND METHOD OF OPERATING**

(30) Priority: 20.02.2024 US 202463555656 P; 13.02.2025 US 202519052397
(71) Applicant: General Electric Company, Cincinnati, Ohio 45215 (US)
(72) Inventor: BALADI, Mehdi Milani, Evendale, 45215 (US); VONDRELL, Randy, Evendale, 45215 (US)
(74) Representative: Openshaw & Co.

(57) **Abstract**

A method (300) of altering a thrust of a hybrid-electric gas turbine engine (10) including a compressor section (22), a combustor (30), a turbine section (32), and an exhaust section (37) arranged to define a working airflow path (54), and with a spool (25, 27) defined by a set of compressor blades (70, 72) and a set of turbine blades (82, 84) coupled to a rotatable shaft (48, 56), and an electric machine (51, 52) operably coupled to the rotatable shaft (48, 56), the method (300) comprising: operating a flow modulator (57) to alter a pressure of a working airflow in the working airflow path (54) to alter a torque acting on the spool (25, 27), and operating the electric machine (51, 52) to at least partially compensate for the altered torque acting on the spool (25, 27).

## Description

### CROSS-REFERENCE TO RELATED APPLICATIONS

This application claims the benefit of and priority to United States Provisional Application 63/555,656, filed February 20, 2024, the disclosure of which is hereby incorporated by reference in its entirety as though fully set forth herein.

### TECHNICAL FIELD

This disclosure relates generally to hybrid-electric gas turbine engines, including hybrid-electric gas turbine engines having electric machine assemblies.

### BACKGROUND

Turbine engines, including gas or combustion turbine engines, and hybrid-electric gas turbine engines, are rotary engines that extract energy from a flow of combusted gases. Turbine engines generally include a compressor, combustor, and turbine in serial flow arrangement. The compressor compresses air which is supplied to the combustor where it is mixed with fuel. The mixture is then ignited to generate hot combustion gases. The combustion gases are supplied to the turbine, which extracts energy from the combustion gases for powering the compressor, as well as for producing useful work to propel an aircraft in flight or to power a load, such as an electrical generator. Hybrid-electric type turbine engines can additionally include at least one electric machine or motor that can be controlled to input additional power to one of the rotating elements of the turbine engine.

### BRIEF DESCRIPTION OF THE DRAWINGS

A full and enabling disclosure, including the best mode thereof, directed to one of ordinary skill in the art, is set forth in the specification, which refers to the appended figures in which:
FIG. 1 is a schematic cross-section view of a hybrid-electric gas turbine engine according to aspects of the present disclosure.
FIG. 2 is a schematic illustration of a control system for controlling an operation of the exemplary hybrid-electric gas turbine engine of FIG. 1, according to aspects of the present disclosure.
FIG. 3 is a flow diagram illustrating a method of operating a hybrid-electric gas turbine engine according to aspects of the present disclosure.

### DETAILED DESCRIPTION

Reference will now be made in detail to present aspects of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

For purposes of illustration, the present disclosure will be described with respect to a turbine engine for an aircraft. The disclosure can have applicability in a variety of vehicles or engines, and can be used to provide benefits in industrial, commercial, military, and residential applications. Further non-limiting examples of other vehicles or engines to which the disclosure can relate can include boats, helicopters, cars, or other aquatic, air, space, or land vehicles. Industrial, commercial, or residential applications of the disclosure can include, but are not limited to, marine power plants, wind turbines, hybrid-electric machines, or small power plants.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all aspects described herein should be considered exemplary.

As may be used herein, the terms "first," "second," and "third" can be used interchangeably to distinguish one component from another and are not intended to signify location or importance of the individual components. The singular forms "a", "an", and "the" include plural references unless the context clearly dictates otherwise. Furthermore, as used herein, the term "set" or a "set" of elements can be any number of elements, including only one.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein.

The terms "forward" and "aft", as used herein, refer to relative positions within a hybrid-electric gas turbine engine or vehicle, and refer to the normal operational attitude of the hybrid-electric gas turbine engine or vehicle. For example, with regard to a blade, forward refers to a position closer to the leading edge of the airfoil and aft refers to a position closer to the trailing edge.

The terms "upstream" and "downstream" refer to the relative direction with respect to a flow in a pathway. For example, with respect to a fluid flow, "upstream" refers to the direction from which the fluid flows, and "downstream" refers to the direction to which the fluid flows. For example, when used in terms of fluid flow, fore/forward can mean upstream and aft/rearward can mean downstream.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

As used herein, the term "fluid" as used herein can be a gas or a liquid. The term "fluid communication" means that a fluid is capable of making the connection between the areas specified.

As used herein, elements being "electrically connected," "electrically coupled," or "in signal communication" can include an electric transmission or signal being sent, received, or communicated to or from such connected or coupled elements. Furthermore, such electrical connections or couplings can include a wired or wireless connection, or a combination thereof.

As used herein, a "controller", for example, "control module", "regulator module", "integrator module" can include a component configured or adapted to provide instruction, control, operation, or any form of communication for operable components to affect the operation thereof. Such controllers or modules can include any known processor, microcontroller, or logic device, including, but not limited to: Field Programmable Gate Arrays (FPGA), a Complex Programmable Logic Device (CPLD), an Application-Specific Integrated Circuit (ASIC), a Full Authority Digital Engine Control (FADEC), a Proportional Controller (P), a Proportional Integral Controller (PI), a Proportional Derivative Controller (PD), a Proportional Integral Derivative Controller (PID), a hardware-accelerated logic controller (e.g. for encoding, decoding, transcoding, etc.), the like, or a combination thereof. While described herein as comprising separate elements, in non-limiting aspects such controllers and modules can be incorporated on one or more devices including a common device, such as a single processor or microcontroller. Non-limiting examples of such controllers or module can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller, a controller module, regulator module, or integrator module can also include a data storage component accessible by the processor, including memory, whether transition, volatile or non-transient, or non-volatile memory. Additional non-limiting examples of the memory can include Random Access Memory (RAM), Read-Only Memory (ROM), flash memory, or one or more different types of portable electronic memory, such as discs, DVDs, CD-ROMs, flash drives, Universal Serial Bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein. In another non-limiting example, a controller can compare a first value with a second value, and operate or control operations of additional components based on the satisfying of that comparison. For example, when a sensed, measured, or provided value is compared with another value, including a stored or predetermined value, the satisfaction of that comparison can result in actions, functions, or operations controllable by the controller. As used, the term "satisfies" or "satisfaction" of the comparison is used herein to mean that the first value satisfies the second value, such as being equal to or less than the second value, or being within the value range of the second value. It will be understood that such a determination may easily be altered to be satisfied by a positive/negative comparison or a true/false comparison. Example comparisons can include comparing a sensed or measured value to a threshold value or threshold value range.

Also, as used herein, while sensors can be described as "sensing" or "measuring" a respective value, sensing or measuring can include determining a value indicative of or related to the respective value, rather than directly sensing or measuring the value itself. The sensed or measured values can further be provided to additional components. For instance, the value can be provided to a controller or processor, and the controller or processor can perform processing on the value to determine a representative value or an electrical characteristic representative of said value.

Electric machines, such as electric motors or electric generators, are used in energy conversion. In the aircraft industry, motors and generators can be used in various critical applications. For example, in some aircraft having a gas turbine engine, an electric machine can be used to provide power to the turbine compressor. In other instances, electric machines can combine a motor mode and a generator mode in the same device, where the electric machine operating in motor mode functions to provide an output torque to the engine, and, in generator mode, also functions as an electrical generator. Regardless of the mode, an electric machine can include a rotor and a stator with windings that are driven to rotate the rotor, which for some aircraft may include the gas turbine engine.

As used herein, a stage of either a compressor or a turbine can refer to a pair of an adjacent set of blades and set of vanes in a flow direction, with both sets of the blades and vanes circumferentially arranged about an engine centerline. The blades rotate relative to the engine centerline and, in one example, are mounted to a rotating structure, such as a disk, to affect the rotation. A pair of circumferentially-adjacent vanes in the set of vanes can be referred to as a nozzle. The vanes, in one example, can be stationary, and mounted to a casing surrounding the set of blades, and, in another example of a counter-rotating engine, are mounted to a rotating drum surrounding the set of blades. The rotation of the blades can create a flow of air through the vanes/nozzles.

Hybrid-electric gas turbine engines can include a fan section, a compressor section, a combustor section and a turbine section. Air entering the compressor section is compressed and delivered into the combustion section, where it is mixed with fuel and ignited to generate a relatively high-temperature high-speed exhaust gas flow of combustion gases. The high-energy exhaust gas flow expands through the turbine section to rotatably drive the compressor and the fan section. At least one electric machine (e.g., an electric motor) can supplement the rotational force provided by the high-energy exhaust gas flow from the combustor. The compressor section can include low and high-pressure compressors, and the turbine section includes low and high-pressure turbines. The high-pressure turbine drives the high-pressure compressor through an outer shaft to form a high-pressure spool, and the low-pressure turbine drives the low-pressure compressor through an inner shaft to form a low-pressure spool. The fan section may also be driven by the low-pressure spool inner shaft, either directly or indirectly through a fan drive gear system.

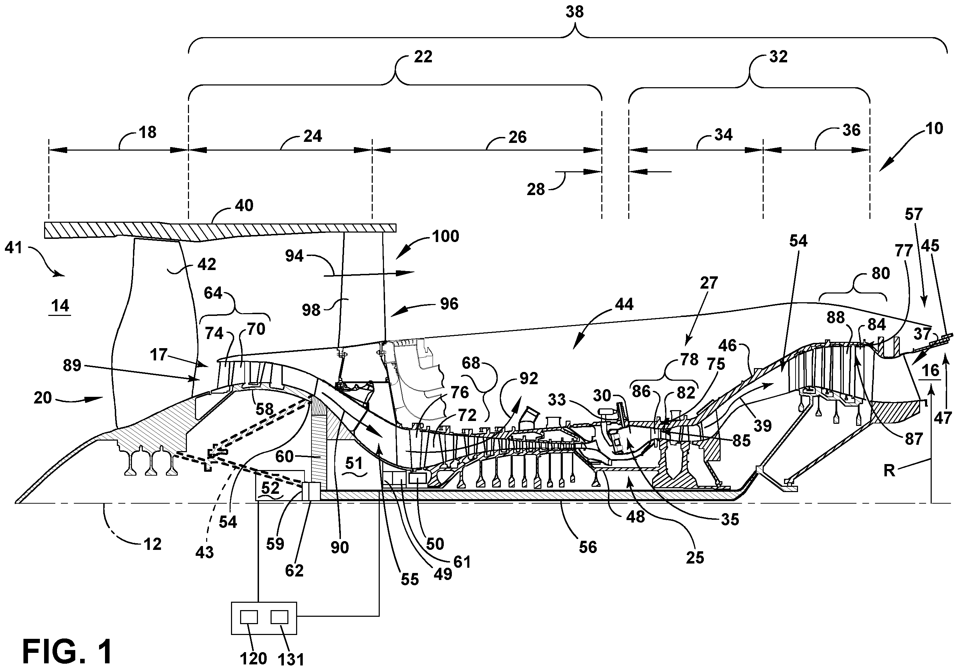

FIG. 1 is a schematic view of a hybrid-electric gas turbine engine 10. The hybrid-electric gas turbine engine 10 can be mounted to an aircraft, such as a fixed-wing aircraft, and can produce thrust for propulsion of the aircraft. The hybrid-electric gas turbine engine 10 has a centerline or longitudinal axis that can define an axis of rotation 12 for the hybrid-electric gas turbine engine 10. The axis of rotation 12 can extend longitudinally forward 14 to aft 16 and define an axial direction. For reference, the hybrid-electric gas turbine engine 10 also defines a radial direction and a circumferential direction. In general, the radial direction R extends outward from and inward to the axis of rotation 12 in a direction orthogonal to the axis of rotation 12, and the circumferential direction extends three hundred sixty degrees (360°) around the axis of rotation 12.

The hybrid-electric gas turbine engine 10 includes, in downstream serial flow relationship, a fan section 18 including a fan assembly 20, a compressor section 22 including a booster or low-pressure (LP) compressor 24 and a high-pressure (HP) compressor 26, a combustion section 28 including a combustor 30, a turbine section 32 including a HP turbine 34, and a LP turbine 36, and an exhaust section 37. A turbine core 38 can be defined by the compressor section 22, the combustion section 28, the turbine section 32, and the exhaust section 37. The HP compressor 26 and HP turbine 34 can be drivingly coupled via a rotatable HP shaft 48 (e.g., a high-speed shaft) to define an HP spool 27. The LP compressor 24 and LP turbine 36 can be drivingly coupled via a rotatable LP shaft 56, (e.g., a low-speed shaft), to define an LP spool 25. The HP shaft 48 and the LP shaft 56 can be disposed coaxially about the hybrid-electric gas turbine engine axis of rotation 12. Additionally, the LP shaft 56 can be disposed within and extend axially beyond a larger diameter annular HP shaft 48, to drivingly connect the LP turbine 36 to the LP compressor 24 and fan assembly 20.

The fan section 18 includes a tubular fan casing 40 surrounding the fan assembly 20. The fan casing 40 can define an annular air inlet 41. The fan assembly 20 includes a plurality of fan blades 42 disposed radially about the hybrid-electric gas turbine engine axis of rotation 12. Fan supports 43 can include, by way of non-limiting example, one or more of rotatable or non-rotatable stabilizers, bearings, sensors, or connecting shafts.

The HP compressor 26, the combustor 30, and the HP turbine 34 form an engine core 44. The turbine core 38, which can include the engine core 44, can be surrounded by a tubular core casing 46. The core casing 46 can be disposed coaxially about the axis of rotation 12. In non-limiting aspects, the core casing 46 can be considered to enclose the compressor section 22, the combustion section 28, and the turbine section 32. The core casing 46 can define an annular core air inlet 17. The core casing 46 can enclose and support the LP compressor 24 for pressurizing air that enters through the core air inlet 17. In some aspects, the core casing 46 can be coupled with the fan casing 40.

The compressor section 22 and turbine section 32 can have multiple respective stages, with the stages comprising respective pairs of blades and vanes. More specifically, the LP compressor 24 and the HP compressor 26 respectively include a set of compressor stages 64, 68, in which a set of compressor blades 70, 72 can rotate relative to a corresponding set of static compressor vanes 74, 76, (e.g., a nozzle), to compress or pressurize the stream of fluid passing through the stage. In a single compressor stage 64, 68, multiple compressor blades 70, 72 can be provided in a ring and can extend radially outwardly relative to the hybrid-electric gas turbine engine axis of rotation 12, from a blade platform to a blade tip, while the corresponding static compressor vanes 74, 76 are positioned upstream of and adjacent to the rotating compressor blades 70, 72. The compressor vanes 74, 76 can comprise an airfoil body having a chord, camber, and other elements typical to an airfoil. It is noted that the number of blades, vanes, and compressor stages shown in FIG. 1 were selected for illustrative purposes only, and that other numbers are possible.

The compressor blades 70, 72 for a stage 64, 68 of the compressor 24, 26 can be mounted to a disk 58, which is mounted to the corresponding one of the HP and LP shafts 48, 56, with each stage having its own respective disk 58. In some aspects, the compressor blades 70, 72 may be part of a blisk, rather than being mounted to a disk. The vanes 74, 76 for a stage 64, 68 of the compressor 24, 26 can be mounted to the core casing 46 in a circumferential arrangement.

The combustor 30 can define an annular combustion chamber 35 that is generally coaxial with the axis of rotation 12. The combustor 30 can further include a fuel nozzle 33 arranged in fluid communication with the combustion chamber 35. An igniter can provide for ignition of the fuel and air within the combustion chamber 35. An exhaust outlet can be configured to allow exit of combustion gases 39 from the combustion chamber 35 in an axial direction, such as toward the turbine section 32.

The HP turbine 34 and the LP turbine 36 respectively include a plurality of turbine stages 78, 80, in which a set of turbine blades 82, 84 are rotated relative to a corresponding set of static turbine vanes 86, 88, to extract energy from the stream of fluid passing through the stage 78, 80. The HP turbine blades 82 for a stage 78 of the HP turbine 34 can be mounted to the HP shaft 48. The LP turbine blades 84 for a stage 80 of the LP turbine 36 can be mounted to the LP shaft 56. In a single turbine stage 78, 80, multiple turbine blades 82, 84 can be provided in a ring and can extend radially outwardly relative to the hybrid-electric gas turbine engine axis of rotation 12, from a blade platform at a radially inner end of the turbine blades 82, 84 to a blade tip 85, 87 at a radially outer end of the turbine blades 82, 84, while the corresponding static turbine vanes 86, 88 are positioned upstream of and adjacent to the rotating blades 82, 84. The turbine vanes 86, 88 can be mounted to the core casing 46 in a circumferential arrangement.

A first gap or HP turbine blade tip clearance 75 can be defined between the blade tips 85 of the HP turbine blades 82 and a radially inward surface of the core casing 46. A second gap or LP turbine blade tip clearance 77 can be defined between the blade tips 87 of the LP turbine blades 84 and the radially inward surface of the core casing 46.

Complementary to the rotor portion, the stationary portions of the hybrid-electric gas turbine engine 10, such as the static vanes 74, 76, 86, 88 among the compressor section 22 and turbine section 32 are also referred to individually or collectively as an outer rotor/stator. As illustrated, the outer rotor/stator can refer to the combination of non-rotating elements throughout the hybrid-electric gas turbine engine 10. Alternatively, the outer rotor/stator that circumscribes at least a portion of the inner rotor/stator, can be designed to rotate. The inner or outer rotor/stator can include at least one component that can be, by way of non-limiting example, a shroud, vane, nozzle, nozzle body, combustor, hanger, or blade, where the at least one component is a plurality of circumferentially arranged component segments having confronting pairs of circumferential ends.

The hybrid-electric gas turbine engine 10 can further include a first electric machine 51 (e.g., a first motor-generator) and a second electric machine 52 (e.g., a second motor-generator). The first electric machine 51 can be rotatably coupled to the HP shaft 48, and the second electric machine 52 can be rotatably coupled to the LP shaft 56. The first and second electric machines 51, 52 can be selectively electrically coupled to one or more electrical power sources 120, such as an inverter. The first and second electric machines 51, 52 can be selectively electrically coupled to a set of electrical loads 131 such as a respective battery bank or resistive load. Although FIG. 1 depicts the first and second electric machines 51, 52 as being operatively coupled to the HP shaft 48 and LP shaft 56, respectively, at a fore end of the hybrid-electric gas turbine engine, the first and second electric machines 51, 52 can be disposed at any suitable location.

The first and second electric machines 51, 52 can each be one or more of a starter, a starter generator, a generator, a motor, a motor-generator, or a combination thereof. The first and second electric machines 51, 52 can include one or more devices that use electromagnetic forces and can include at least one respective drive shaft. It is further contemplated that the first and second electric machines 51, 52 can include any number of gears, shafts, transformers, magnetics, brushes, induction devices, other electrical or mechanical elements, or a combination thereof.

In the illustrated example, the first electric machine 51 has a rotatable first input/output shaft 49 rotatably coupled to the HP shaft 48, and the second electric machine 52 has a rotatable second input/output shaft 59. The HP shaft 48 can couple the HP turbine 34 to the first input/output shaft 49 and the LP shaft 56 can connect the LP turbine 36 to the second input/output shaft 59. In non-limiting aspects, the first and second electric machines 51, 52 can be selectively coupled to the HP and LP shafts 48, 56 via a first clutch 50 and a second clutch 60, respectively. Additionally, or alternatively, it is contemplated that the first electric machine 51 can further include a first gearbox 61 and the second electric machine 52 can include a second gearbox 62. The first gearbox 61 can couple the first input/output shaft 49 to the HP shaft 48 or the first clutch 50 where the first clutch 50 selectively engages the HP shaft 48. The second gearbox 62 can couple the second input/output shaft 59 to the LP shaft 56 or the second clutch 60 where the second clutch 60 selectively engages the LP shaft 56. In other non-limiting aspects, either the first or second clutch 50, 60, or the first or second gearbox 61, 62, or combinations thereof can be omitted.

While FIG. 1 depicts the first and second electric machine 51, 52 selectively rotatably coupled to the HP and LP shafts 48, 56, other aspects are not so limited, and the first and second electric machine 51, 52 can be fixedly or permanently rotatably coupled to the HP and LP shafts 48, 56 respectively. The rotatable coupling between the HP shaft 48 and the first electric machine 51, and the rotatable coupling between the LP shaft 56 and the second electric machine 52, can thus be permanent, including rotatably permanent.

The HP shaft 48 may be coupled to the first electric machine 51, and the LP shaft 56 may be coupled to the second electric machine 52, at any point or location, including a bottom portion, top portion, or aft side of the first and second electric machine 51, 52, respectively. It is further contemplated that the first electric machine 51 can be located in-line with the HP shaft 48, and the second electric machine 52 can be located in-line with the LP shaft 56.

The first clutch 50 and the second clutch 60 can be a respective over-running clutch that is in direct rotational communication with the first electric machine 51 and second electric machine 52, respectively, to selectively provide an output to the HP shaft 48 and LP shaft 56. Alternatively, the first and second clutch 50, 60 can include any type or combination of clutch mechanisms, such as, but not limited to one or more of a sprag, spring, a roller or ball, a ratchet and pawl clutch, or other known clutches.

As will be described in more detail herein, electrical energy from the first and second electric machines 51, 52 can be selectively communicated to the set of electrical loads 131.

In operation, for example during a cruise mode, an incoming airflow 89 (represented by arrow 89) enters the hybrid-electric gas turbine engine 10 at the fan section 18 through the air inlet 41 defined by the fan casing 40. The incoming airflow 89 passes through the fan blades 42 and is split such that a portion of the incoming airflow 89 is channeled into the LP compressor 24, as a first airflow (represented by arrow 90) through the core air inlet 17. The incoming airflow 89 exits the fan section 18, which then supplies the first airflow 90 as a pressurized first airflow 90 to the HP compressor 26, which further pressurizes the air. Another portion 94 of the incoming airflow 89 bypasses the LP compressor 24 and the engine core 44 and exits the hybrid-electric gas turbine engine 10 through a vane row, and, more particularly, an outlet guide vane assembly 96 including a set of airfoil guide vanes 98 (e.g., outlet guide vanes or OGVs), at the fan exhaust side 100. More specifically, a circumferential row of radially extending airfoil guide vanes 98 are utilized adjacent the fan section 18 to exert some directional control of the airflow portion 94.

The pressurized first airflow 90 is discharged from the HP compressor 26 into the combustor 30. Fuel can be injected from the fuel nozzle 33 to mix with the first airflow 90 and form a fuel-air mixture provided to the combustion chamber 35 for combustion. Ignition of the fuel-air mixture can be triggered by the igniter thereby generating combustion gases 39. Some work is extracted from these combustion gases 39 by the HP turbine 34, which drives the HP compressor 26 via the HP shaft 48. The combustion gases 39 are drivingly discharged from the HP turbine 34 into the LP turbine 36, via which additional work is extracted to drive the LP compressor 24 via the LP shaft 56. The combustion gases 39 are ultimately discharged from the hybrid-electric gas turbine engine 10 via the exhaust section 37 to produce thrust.

The hybrid-electric gas turbine engine 10 can define a working airflow path 54 (e.g., a primary working airflow path) through which a working airflow 55 can flow during operation of the hybrid-electric gas turbine engine 10. The working airflow path 54 can extend from the fan section 18 through the compressor section 22, the combustor 30, the turbine section 32, and the exhaust section 37. The working airflow 55 can include the incoming airflow 89, the first airflow 90, and the combustion gases 39.

The exhaust section 37 can include a variable exhaust nozzle 45 having a variable exhaust opening 47. The variable exhaust nozzle 45 can, with some aspects, include a turkey feather configuration. Operation of the variable exhaust nozzle 45 can alter pressure of the working airflow 55 at the LP spool 25 and alter the torque on at least the LP spool 25. For example, operating the variable exhaust nozzle 45 to increase the cross-sectional area of the variable exhaust opening 47 alters the working airflow path 54 and decreases pressure of the working airflow 55 at the LP spool, which can decrease the torque on the LP spool 25. Operating the variable exhaust nozzle 45 to decrease the cross-sectional area of the variable exhaust opening 47 alters the working airflow path 54 and increases the pressure of the working airflow 55, which can increase the torque on the LP spool 25.

A portion of the pressurized first airflow 90 can be drawn from the compressor section 22 as bleed air 92. The bleed air 92 can be drawn from the pressurized first airflow 90 and provided to engine components for cooling. The temperature of pressurized first airflow 90 entering the combustor 30 is significantly increased in the combustor 30 via combustion. As such, cooling provided by the bleed air 92 can be used for cooling during operation of engine components in the heightened temperature environments (e.g., downstream of the combustor 30). Some of the air supplied by the fan assembly 20 can bypass the engine core 44 and be used for cooling of portions, especially hot portions, of the hybrid-electric gas turbine engine 10, and/or used to cool or power other aspects of the aircraft. In the context of a turbine engine, the hotter portions of the hybrid-electric gas turbine engine 10 are normally downstream of the combustor 30, especially the turbine section 32, with the HP turbine 34 being the hottest portion as it is directly downstream of the combustion section 28. Other sources of cooling fluid can be, but are not limited to, fluid discharged from the LP compressor 24 or the HP compressor 26.

Based on the rotatable coupling between the LP and HP spools 25, 27 to the first and second input/output shafts 49, 59, respectively, when a portion of the first or second electric machine 51, 52 is rotating, then LP and HP spools 25, 27 can rotate (e.g., depending on the state of the clutches 50, 60). Conversely, when the LP and HP spools 25, 27 rotate, then at least a portion of the first or second electric machines 51, 52, respectively, can rotate (e.g., depending on the state of the clutches 50, 60). Therefore, in operation, the first electric machine 51 can drive the HP shaft 48 of the HP spool 27 by providing a rotatable output or torque to the HP shaft 48 via the first input/output shaft 49, and the second electric machine 52 can drive the LP shaft 56 of the LP spool 25 by providing a rotatable output or torque to the LP shaft 56 via the second input/output shaft 59. Alternatively, the first electric machine 51 can receive a rotatable input or torque from the first input/output shaft 49, and the second electric machine 52 can receive a rotatable input or torque from the second input/output shaft 59, which can be utilized to generate electrical energy.

In an aspect, and as will be described in more detail herein, the first electric machine 51, or the second electric machine 52, or both, can be respectively configured to selectively operate in one of a motor mode and a generator mode. For example, the first and second electric machines 51, 52 can be arranged to receive electrical power to independently operate in a motor mode to provide an output torque to the LP and HP spools 25, 27 via the first and second input/output shafts 49, 59, for example to start the engine, or to provide additional thrust to the LP and HP spools 25, 27 when desired. That is, rotation of the first or second electric machine 51, 52 can cause the first or second electric machine 51, 52 to provide torque to the HP or LP shafts 48, 56, respectively. In some configurations, the additional torque can change the rotational speed (e.g., in rotations per minute, RPM) of the LP or HP spool 25, 27, which can change a thrust provided by the hybrid-electric gas turbine engine 10, at least in some instances. The rotational speed of the LP spool 25 and the HP spool 27 can be changed independent of each other of the LP spool 25 and the HP spool 27. Alternatively, the first and second electric machines 51, 52 can selectively receive an input torque from the HP and LP shafts 48, 56, via the first and second input/output shafts 49, 59 respectively, and operate in a generator mode to generate electrical power utilizing the rotational energy of the HP or LP shaft 48, 56, for example to provide an electrical output to the electrical load 131. In such instances, rotation of the first or second electric machine 51, 52 by the HP or LP shafts 48, 56, respectively, provides a drag or rotational load on the HP or LP shafts 48, 56, respectively. In some configurations, the drag or load can change the rotational speed of the HP or LP shaft 48, 56, which can change the thrust provided by the hybrid-electric gas turbine engine 10, at least in some circumstances (e.g., if the drag is not otherwise offset, such as via a flow restrictor 57). The rotational speed of the LP spool 25 and the HP spool 27 can be changed (e.g., increased or decreased) independent of the other of the LP or HP spool 25, 27.

The hybrid-electric gas turbine engine 10 can include the flow restrictor 57, which can comprise one or more of the variable exhaust nozzle 45 (with the variable exhaust opening 47) or a set of variable airfoils. While referred to as flow restrictor 57, the flow restrictor 57 can be configured to increase and decrease fluid flow, and can also be referred to as a flow modulator. The hybrid-electric gas turbine engine 10 can include various airfoils that can be configured as variable airfoils (e.g., variable pitch airfoils) and included in the set of variable airfoils of the flow restrictor 57. For example, one or more of the fan blades 42, the compressor blades 70, 72, the compressor vanes 74, 76, the turbine blades 82, 84, the turbine vanes 86, 88, or the airfoil guide vanes 98 can be configured with variable airfoils and included in the flow restrictor 57. In one example implementation, the set of variable airfoils of the flow restrictor 57 includes a plurality of variable compressor vanes 76 of the HP compressor 26, and the flow restrictor 57 includes the variable exhaust nozzle 45. The flow restrictor 57 can modify the working airflow path 54 to alter the flow resistance experienced by and the pressure of the working airflow 55 in the airflow path 54. For example, altering the pitch of airfoils in a first manner, such as opening fan blades (e.g., rotating the blades so the blades are closer to perpendicular to the circumferential direction) and closing vanes (e.g., rotating the vanes so the vanes are closer to parallel with the circumferential direction), and altering exhaust nozzles in a first manner, such as closing exhaust nozzles (e.g., to reduce exhaust opening cross-sectional area) can constrict the working airflow path 54, increase flow resistance, and increase pressure. Altering the pitch of airfoils in a second manner, such as closing fan blades (e.g., rotating the blades so the blades are closer to parallel to the circumferential direction) and opening vanes (e.g., so rotating the vanes so the vanes are closer to perpendicular with the circumferential direction), and altering exhaust nozzles in a second manner, such as opening exhaust nozzles (e.g., to increase exhaust opening cross-sectional area), can expand the working airflow path 54, reduce flow resistance, and reduce pressure. Increased pressure of the working airflow 55 generally increases torque acting on the LP and HP spools 25, 27 (e.g., increased resistance to rotation) and generates an increased torque demand on the hybrid-electric gas turbine engine 10. The increased torque demand can be compensated for, at least in part, by operating one or both electric machines 51, 52 in the motor mode, operating the combustor 30 to provide more torque (e.g., via more fuel), or a combination thereof, which can increase thrust. Decreased pressure of the working airflow 55 generally decreases torque acting on the LP and HP spools 25, 27 (e.g., decreased resistance to rotation) and reduces a torque demand on the hybrid-electric gas turbine engine 10. The decreased torque demand can be compensated for, at least in part, by operating one or both electric machines 51, 52 in the generator mode, operating the combustor 30 to provide less torque (e.g., via less fuel), or a combination thereof, which can decrease thrust.

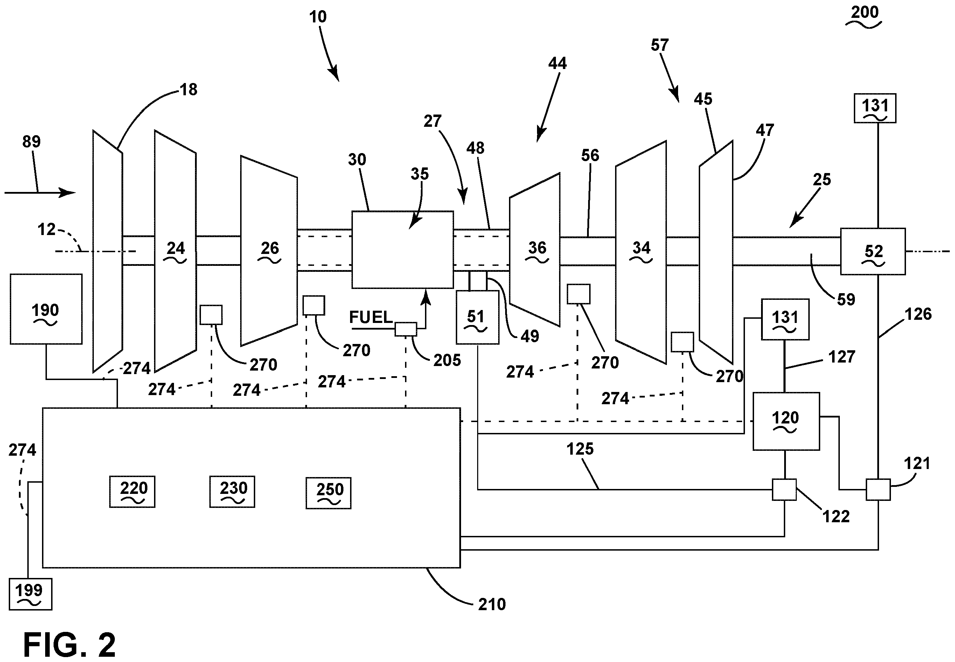

FIG. 2 is a schematic illustration of the hybrid-electric gas turbine engine 10 and a control system 200 operable to control operation of the hybrid-electric gas turbine engine 10. As illustrated, the hybrid-electric gas turbine engine 10 can include one or more fuel control devices 205 operable to control fuel flow for the hybrid-electric gas turbine engine 10, and more particularly, to the combustion chamber 35 of the combustor 30. The fuel control device 205 can be communicatively coupled with the control system 200, e.g., via a suitable wired or wireless communication link. As illustrated, the hybrid-electric gas turbine engine 10 and control system 200 can be communicatively coupled with one or more thrust input devices 190, such as power or thrust levers movable by a user (e.g., a pilot). The one or more thrust input devices 190 can provide an input signal to the control system 200 indicative of a change in the thrust demand. The one or more thrust input devices 190 can be located at any desired location (e.g., a cockpit) and can include a flight control system 199 (e.g., an autopilot system) operable to automatically change the thrust demand to the hybrid-electric gas turbine engine 10.

The control system 200 can be disposed in any suitable location, such as onboard the hybrid-electric gas turbine engine 10, or in a cockpit of a vehicle powered by the hybrid-electric gas turbine engine 10. In some aspects, some or all of the components of the control system 200 can be disposed onboard the hybrid-electric gas turbine engine 10 or offboard the hybrid-electric gas turbine engine 10. The control system 200 can be communicatively coupled to a set of sensors 270 disposed on the hybrid-electric gas turbine engine 10.

The control system 200 can include a controller 210 (e.g., an electronic controller), an electrical power sources 120, a first electrical control device 121, and a second electrical control device 122. For instance, the first and second electrical control devices 121, 122 can comprise a set of inverters, converters, variable frequency drives (VFD), rectifiers, devices operable to control the flow of electrical current, etc., and combinations thereof. Although the first and second electrical control devices 121, 122 are shown schematically in FIG. 2 as separate from the electrical power source 120, and separate from the first and second electric machine 51, 52, it will be appreciated that one or both of first and second electrical control devices 121, 122 can be located onboard the electrical power source 120, the first and second electric machine 51, 52, or a combination thereof.

The controller 210 can include a processor 220, a memory 230, and a communications assembly 250. In some non-limiting aspects, the controller 210 can include a thrust demand scheduler. Additionally, or alternatively, a set of thrust demand schedules can be stored in the memory 230. The processor 220 can be configured to perform a variety of computer-implemented functions and/or instructions (e.g., performing the methods, steps, calculations and the like and storing relevant data as disclosed herein). The instructions, when executed by the processor, can cause the processor 220 to perform operations, as described herein. The controller 210 can be communicatively coupled to the first electrical control device 121 and the second electrical control device 122 to control operation thereof.

The controller 210 can include a system of controllers or a single controller. The controller 210 can include a controller dedicated to control of an operation of the hybrid-electric gas turbine engine 10 and associated electrical components. Additionally or alternatively, the controller 210 can include an engine controller configured to control the hybrid-electric gas turbine engine 10 and its associated electrical components. The controller 210 can include, for example, an Electronic Engine Controller (EEC), an Electronic Control Unit (ECU) of a Full Authority Digital Engine Control (FADEC) system, or a combination thereof.

The first and second electric machines 51, 52 can be selectively electrically coupled with the one or more electrical power sources 120, e.g., via a first power bus 125, and a second power bus 126. The first and second electric machines 51, 52 can be further selectively electrically coupled with set of electrical loads 131, e.g., via a second power bus 127. The first and second electric machines 51, 52 can be configured to receive electrical power from the one or more electrical power sources 120. The one or more electrical power sources 120 can include any suitable power source. For example, the one or more electrical power source 120 can include, without limitation, one or more energy storage devices (e.g., one or more batteries), electric generators, auxiliary power unit (APU), photovoltaic panel, DC power supply, AC power supply, or any source of electrical power, or a combination thereof. The one or more electrical power sources 120 can be located onboard the hybrid-electric gas turbine engine 10, mounted or positioned offboard of the hybrid-electric gas turbine engine 10, or a combination thereof.

The set of electrical loads 131 can include for example, without limitation, a battery bank, lighting, a pump, a heater, an instrument, a radio, a flap, a landing gear, other systems or operative structures, or combinations thereof.

The set of sensors 270 can include one or more sensors for sensing, measuring, detecting, and/or monitoring various engine operating conditions or parameters during operation. For instance, one or more sensors 270 can be positioned at the LP compressor 24, one or more sensors 270 can be positioned at the HP compressor 26, one or more sensors 270 can be positioned at the HP turbine 34, and one or more sensors 270 can be positioned at the LP turbine 36, among other possible locations. The sensors 270 can sense or measure various engine conditions, e.g., pressures, speeds, temperatures, and provide one or more signals to the controller 210. The controller 210 can be communicatively coupled with the set of sensors 270, via a suitable wired or wireless communication link. It will be appreciated that the hybrid-electric gas turbine engine 10 can include any number of sensors at other suitable stations, such as along the working airflow path 54.

The communications assembly 250 can include one or more receivers, transmitters, transceivers, antennas, radios, or combinations thereof, among others. The communications assembly 250 can provide communications between the controller 210 and various components of hybrid-electric gas turbine engine 10 and associated components and controls, such as the flight control system 199. The communications assembly 250 can include a sensor interface (e.g., one or more analog-to-digital converters) to permit signals transmitted from the set of sensors 270 to be converted into signals that can be understood and utilized by the processor 220. It should be appreciated that the sensors 270 can be communicatively coupled to the communications assembly 250 using any suitable means. For example, the sensors 270 can be coupled to the communications assembly 250 via a wired connection, a wireless connection, such as by using any suitable wireless communications protocol, or a combination thereof. As such, the processor 220 can be configured to receive one or more signals or outputs from the sensors 270, such as one or more operating conditions, parameters, or measurements, and the like.

In operation, the hybrid-electric gas turbine engine 10 is operable to produce propulsive thrust (e.g., for an aerial vehicle). A user, such as a pilot, can initiate a change in the thrust output (e.g., a thrust demand) of the hybrid-electric gas turbine engine 10 for example, via the thrust input device 190. The change in thrust demand can be an increase in thrust demand or a decrease in thrust demand. For instance, to perform a steep climb during cruise operation, a pilot can operate the thrust input device 190 to increase the power level and consequently increase the thrust demand to the hybrid-electric gas turbine engine 10. It will be appreciated that the change in thrust demand can correlate to a change in the rotational speed, torque, or both, of the HP shaft 48 or LP shaft 56 or both. A change in the rotational speed of the HP shaft 48 and LP shaft 56 can be an acceleration or a deceleration. A change in torque of the HP shaft 48 and the LP shaft 56 can be an increase or a decrease.

The controller 210 can receive one or more inputs 274. The inputs 274 can be in the form of analog or digital electrical signals, or combinations thereof. For example, the controller 210 can receive an input 274 from at least one of the thrust input device 190 or the flight control system 199 indicative of the change in thrust demand. Additionally, the controller 210 can receive one or more inputs 274 indicative of one or more operating conditions or parameters of the hybrid-electric gas turbine engine 10. The controller 210 can receive the one or more inputs from one or more sensors 270, via a user input, from control logic operable to determine the value of the parameters or conditions based at least in part on the received sensor outputs, from one or more models, or automatically based on commands from a flight control system 199, and various combinations thereof.

For example, in non-limiting aspects, the operating conditions and parameters that can be sensed, determined, and/or modeled include, without limitation, a speed of the HP shaft 48, an acceleration of the HP shaft 48, a torque of the HP shaft 48, a speed of the LP shaft 56, an acceleration of the LP shaft 56, a torque of the LP shaft 56, a HP turbine blade tip clearance, a LP turbine blade tip clearance, a fan blade tip clearance, a seal tooth clearance, an altitude, an ambient temperature, an exhaust gas temperature, a compressor discharge temperature, an inlet LP compressor temperature, a specific fuel consumption, an engine efficiency, a Mach number, a thrust, an airspeed, a fan flow, a core flow, a current electrical current draw of the first and second electric machines 51, 52, a fan speed, a core speed, an engine inlet pressure, a bypass passage pressure, an inlet high-pressure compressor pressure, a rotational speed of the LP spool 25, a rotational speed of the HP spool, a compressor discharge pressure, an HP turbine pressure, an accelerometer measurement, a flight control position, and/or one or more waypoints of a flight mission (e.g., the origin, the destination, and one or more points therebetween), among others, or various combinations thereof.

Based at least on the thrust demand schedule, the controller 210 can operate or control an operation of the first electrical control device 121 and the second electrical control device 122. The first electrical control device 121 can be operable to control the electrical power provided to the first electric machine 51 from the at least one electrical power source 120. The second electrical control device 122 can be operable to control the electrical power provided to the second electric machine 52 from the at least one electrical power source 120. The first and second electrical control devices 121, 122 can be further operable to condition and/or convert electrical power (e.g., from AC to DC or vice versa) provided to the first and second electric machines 51, 52.

The controller 210 can further control the first and second electric machines 51, 52 to selectively operate in the motor mode or the generator mode. The first and second electric machines 51, 52 can be selectively operated in the motor mode in response to the electrical power received from the at least one electrical power source 120. Alternatively, the first and second electric machines 51, 52 can be selectively operated in the generating mode in response to a rotation of the LP and HP spools 25, 27 coupled to the first and second electric machines 51, 52 and without receiving power from the at least one electrical power source 120.

For example, to selectively operate the first and second electric machines 51, 52 in the motor mode, the controller 210 can be configured to control the first electrical control device 121 and the second electrical control device 122 to selectively provide electrical power to the first or second electric machines 51, 52 via the first and second power bus 125, 126 or both. Conversely, to selectively operate the first and second electric machines 51, 52 in the generator mode, the controller 210 can be configured to control the first electrical control device 121 and the second electrical control device 122 to selectively cease providing electrical power to the first and or second electric machines 51, 52 during a rotation of the HP shaft 48 or LP shaft 56.

When operating in the motor mode, the first and second electric machines 51, 52 can independently provide a torque to the LP and HP spools 25, 27 via the first and second input/output shafts 49, 59 (e.g., to drive the LP and HP spools 25, 27). Conversely, when operating in the generator mode, the first and second electric machines 51, 52 can act as a load to receive or absorb a torque from the LP and HP spools 25, 27, via the first and second input/output shafts 49, 59, respectively, and provide an electrical output to set of electrical loads 131.

More specifically, when operating in the motor mode, the energy supplied to the first and second electric machines 51, 52 (e.g., from the first and second electrical control devices 121, 122) rotates one or more respective components of the first and second electric machines 51, 52 resulting in a rotation of the respective first or second input/output shaft 49, 59. Since the first and second input/output shafts 49, 59 are coupled to the HP shaft 48 of the HP spool 27 and the LP shaft 56 of the LP spool 25, respectively, the first and second electric machines 51, 52 can provide a torque to and rotate the LP and HP spools 25, 27. Rotation of the HP spool 27 rotates the respective blades 72, 82 of the HP compressor 26 and HP turbine 34. Rotation of the LP spool 25 rotates the respective blades 70, 84 of the LP compressor 24 and the LP turbine 36. Conversely, when operating in the generator mode, the electrical power supplied to the first and second electric machines 51, 52 (e.g., from the first and second electrical control devices 121, 122) can be cut off. Since the first and second input/output shafts 49, 59 are coupled to the rotating HP shaft 48 of the HP spool 27 and the LP shaft 56 of the LP spool 25, respectively, the rotating LP and HP spools 25, 27 can drive a rotation of the first and second electric machines 51, 52.

For example, in one non-limiting instance, a particular hybrid-electric gas turbine engine 10 can be powering an aircraft during a cruise mode of a flight, with one of the first and second electric machines 51, 52, or both, operating in the motor mode, (e.g., having stator terminals electrically coupled to the electrical power source 120, with a rotor rotating in the direction of a stator rotating magnetic field) to provide torque to the LP spool 25 or HP spool 27, or both. In the event of a change in a thrust demand, additional electrical power can be provided to one of the first and second electric machines 51, 52, or both, to provide additional torque to the LP spool 25 or HP spool 27, or both. The additional torque can supplement the torque provided by the combustion gases 39 from the combustor 30. Alternatively, in another non-limiting instance of a change in a thrust demand, wherein, based on operating parameters, one of a deceleration, or a slower or more gradual rate of acceleration of one or both of the LP spool 25 or the HP spool 27, or both, is desired to satisfy the increase in thrust demand (e.g., less acceleration than is currently provided via the combustor 30), one of the first and second electric machines 51, 52, or both, can be operated in the generator mode, to provide an electrical output to the set of electrical loads 131, while simultaneously applying a drag or rotational load to the HP shaft 48 or LP shaft 56, or both. In this way, the first and second electric machines 51, 52 can be independently controlled to optimize (e.g., increase or decrease an acceleration or deceleration of) the HP shaft 48 or LP shaft 56, particularly during transient load conditions.

In response to the change in thrust demand, or the one or more inputs 274 received by the controller 210, or a combination thereof, the controller 210 can determine an amount or a rate of change, or both, of thrust to generate. Thrust can be generated according to the speed of the LP spool 25, the speed of the HP spool 27, the torque of the LP spool 25, the torque of the HP spool 27, or a combination thereof. For example, higher spool speeds and torques can generate higher levels of thrust, and lower spool speeds and torques can generate lower levels of thrust.

The LP and HP spools 25, 27 can have maximum capacities or ratings for speed, torque, rates of change of speed, or a combination thereof. In some instances, the maximum capacity or rating for torque can be relatively high compared to the maximum capacity or rating for speed, at least for certain engine conditions. For example, during aircraft cruising, the LP spool 25 may rotate at speeds equal to or between 60% and 80% of maximum speeds but less than 60% of maximum torque, and the HP spool 27 may rotate at speeds equal to or between 90% and 95% of maximum speeds but less than 80% of maximum torque, so it may be desirable to utilize a greater amount of the torque capacity in generating thrust, including additional thrust, relative to the speed capacity.

With increased thrust demands, such as for takeoff and climb events, some designs increase the speed of one or both of the LP and HP spools 25, 27, but rotating at increased speed may reduce the service life the LP and HP spools 25, 27 and associated components, so limiting the amount of time during which the LP and HP spools 25, 27 rotate at those speeds may be desirable. Additionally or alternatively, operating the spools 25, 27 at speeds that are significantly increased or decreased relative to cruising speeds can reduce the service life of the LP and HP spools 25, 27 and associated components, so limiting total differences in spool speeds, at least after takeoff and prior to landing, relative to cruising speed may be desirable to increase service life.

The controller 210 can be configured to meet changing thrust demands, while limiting spool speeds, rates of change of spool speeds, differences from cruising spool speeds, or a combination thereof, such as via cooperatively controlling the combustor 30, one or both of the electric machines 51, 52, and the flow restrictor 57. For example, the controller 210 can be configured to operate the hybrid-electric gas turbine engine 10 such that one or both of the LP and HP spools 25, 27 operate within one or more thresholds, such as spool speed thresholds, spool speed rate of change thresholds, or both, at least during some portions of a flight mission.

Controlling the flow restrictor 57 can alter the resistance to flow and the pressure of the working airflow 55 in the working airflow path 54, which can alter the torque acting on the LP and HP spools 25, 27 (e.g., torque applied by the working airflow 55). For example, increasing the flow resistance provided by the flow restrictor 57 can increase the pressure of the working airflow 55, which can increase the torque acting on the LP and HP spools 25, 27. Decreasing the flow resistance provided by the flow restrictor 57 can decrease the pressure of the working airflow 55, which can decrease the torque acting on the LP and HP spools 25, 27.

To provide increased thrust in response to an increased thrust demand, the controller 210 can increase the electrical power provided to one or both of the electric machines 51, 52 to provide additional torque to one or both of the LP and HP spools 25, 27. The controller 210 can also modify the working airflow path 54 of the hybrid-electric gas turbine engine 10, such as via the flow restrictor 57, to increase the torque acting on one or both of the LP and HP spools 25, 27. The additional torque provided by one or both electric machines 51, 52 can supply at least a portion of the additional torque applied by the higher pressure working airflow 55. By increasing the torque demand and compensating for at least some of the increased torque demand via the one or more electric machines 51, 52, the hybrid-electric gas turbine engine 10 provides additional thrust while reducing or eliminating increases in spool speed, fuel flow, flow path temperatures, flow path pressures, or a combination thereof. For example, if the increased torque acting on one or both of the LP and HP spools 25, 27 generated via the flow restrictor 57 is fully met by the one or more electric machines 51, 52 and the corresponding thrust increase is sufficient to meet the increased thrust demand, the hybrid-electric gas turbine engine 10 can meet the increased thrust demand without materially increasing spool speed (e.g., there may be some nominal changes to spools speeds, such as less than 1%). If a portion of the increased torque acting on one or both of the LP and HP spools 25, 27 as a result of the flow restrictor 57 is not offset by one or both electric machines 51, 52, the controller 210 can operate the combustor 30 to provide the additional torque (e.g., via additional fuel), which can increase spool speed, but to a lesser degree than in the absence of the fluid flow path modification via the flow restrictor 57. Additionally, if the thrust associated with the increased torque provided by one or both of the electric machines 51, 52 is not sufficient to meet the increased thrust demand, the controller 210 can operate the combustor 30 to provide additional thrust (e.g., via more fuel). This increased operation of the combustor 30 can also increase spool speed, but to a lesser degree than in the absence of the fluid flow path modification via the flow restrictor 57. For example, restricting the working airflow 55 via the flow restrictor 57 at least partially offsets the increase in the speeds of the LP and HP spools 25, 27 that would otherwise result from adding torque from the electric machines 51, 52 to the LP and HP spools 25, 27.

Additionally or alternatively, the controller 210 can be configured to limit a deceleration rate of one or both of the LP and HP spools 25, 27, such as to a deceleration threshold, in response to a decreased thrust demand. For example, the controller 210 may control the combustor 30 to start reducing the thrust provided by combustion, which can start slowing down one or both of the LP and HP spools 25, 27. The controller 210 can also modify the working airflow path 54 of the hybrid-electric gas turbine engine 10 by controlling the flow restrictor 57 to restrict flow to a lesser extent (e.g., open the flow restrictor 57), which can decrease the torque from the working airflow 55 acting on one or both of the LP and HP spools 25, 27 and further decrease thrust without directly altering spool speed. Further, the controller 210 can operate one or both electric machines 51, 52 in the generator mode to provide a drag or rotational load to the LP and HP spools 25, 27 to compensate for some or all of the decreased torque acting on associated with opening the flow restrictor 57. For example, some of the torque generated via the combustor 30 (e.g., excess torque) can be absorbed by one or both electric machines 51, 52 to generate electrical power instead of generating thrust. Opening the flow restrictor 57 and operating one or both electric machines 51, 52 in the generator mode can reduce thrust to a greater extent while maintaining higher spool speeds (e.g., for slower spool deceleration) than without opening the flow restrictor 57. For example, in some configurations, one or both electric machines 51, 52 alone may reduce the spool speed at a greater rate than desired.

In non-limiting aspects, in response to the one or more inputs received by the controller 210, the controller 210 can determine or generate a respective thrust demand schedule. Each thrust demand schedule can define a schedule of fuel flow to the combustor 30 over a predetermined time period, a schedule of electrical current flow to and from the first and second electric machines 51, 52 over the time period, and a target configuration of the flow restrictor 57. That is, in non-limiting aspects, the thrust demand schedule can include a fuel flow schedule, an electric current schedule, and a flow restrictor opening/closing schedule. The controller 210 can control fuel flow to the combustor 30 over the time period based at least in part on the determined fuel flow schedule, control electrical current flow to and from the first and second electric machines 51, 52 over the time period based at least in part on the electric current schedule, and control opening and closing of the flow restrictor 57 based at least in part on the flow restrictor schedule. In this way, the thrust demand schedule can define a portion of thrust, or rate of change of thrust, or both, attributable to (i) combustion in the combustor 30, (ii) at least one of the first and second electric machines 51, 52, and (iii) the flow restrictor 57. The thrust demand schedule can be determined by the controller 210 so that, when the thrust demand schedule is implemented, the thrust demand is satisfied or substantially met.

In some non-limiting aspects, a set of thrust demand schedules can be predetermined and saved to memory 230. Additionally or alternatively, determining the thrust demand schedule can comprise selecting a predetermined thrust demand schedule from memory 230. Additionally or alternatively, determining the thrust demand schedule can comprise modifying a predetermined thrust demand schedule, or calculating a thrust demand schedule during operation. A predetermined thrust demand schedule can, for example, correspond to expected flight activities during a flight mission, such as takeoff, cruising, climbing, and descent. Additionally or alternatively, an expected electrical power schedule can be predetermined, saved to the memory 230, modified during operation, or a combination thereof. The expected electrical power schedule can include expected electrical power provided to and received from the electric machines 51, 52, along with associated electrical power available from the electrical power source 120 (e.g., battery state of charge).

In operation, in the event of a change in the thrust demand of the hybrid-electric gas turbine engine 10, the controller 210 can determine (i) a portion of thrust, or a rate of change of thrust, or both, attributable to combustion in the combustor 30, (ii) another portion of thrust or a rate of change of thrust, or both, attributable to the first electric machine 51, the second electric machine 52, or both, and (iii) yet another portion of thrust or rate of change of thrust, or both, attributable to alteration of the working airflow path 54 (e.g., via the flow restrictor 57), to cooperatively to satisfy the change in thrust demand, while limiting spool speeds, spool speed rates of change, total speed differences, or combinations thereof, such as to limit cyclic damage, which can increase service life of the hybrid-electric gas turbine engine 10 and components thereof.

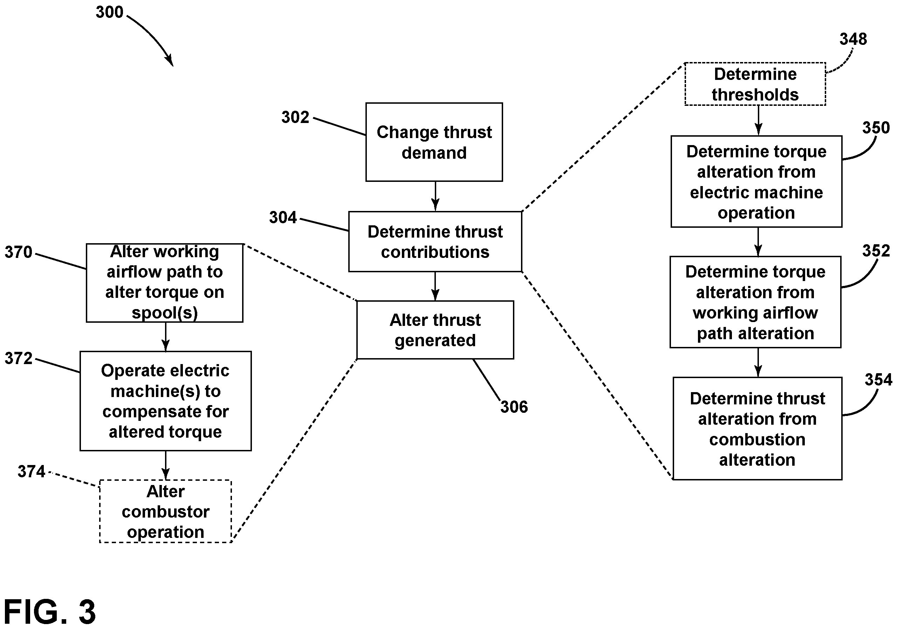

FIG. 3 provides a flow diagram of an exemplary method 300 of operating a hybrid-electric gas turbine engine 10 in accordance with exemplary aspects of the present disclosure. For instance, the method 300 is described herein with respect to an operation of the hybrid-electric gas turbine engine 10 of FIGS. 1 and 2 only to describe exemplary aspects of the present subject matter and is not intended to be limiting.

At block 302, the method 300 includes the controller 210 receiving the input indicative of a change in a thrust demand to the hybrid-electric gas turbine engine 10. The input 274 indicative of a change in a thrust demand can be received by the controller 210. For instance, the controller 210 can receive the input 274 indicative of the change in the thrust demand in response to a user input (e.g., movement of the thrust input device 190), or automatically based on commands or signals from the flight control system 199, such as in accordance with a predetermined thrust demand schedule.

At block 304, the method 300 includes the controller 210 determining thrust contributions, such as from or associated with the electric machines 51, 52, alteration of the working airflow path 54 (e.g., via the flow restrictor 57), the combustor 30, or a combination thereof. The thrust contribution associated with the electric machines 51, 52 corresponds to the torque provided to or absorbed from one or both of the LP and HP spools 25, 27 by the electric machines 51, 52. So, the thrust contribution from operation of the electric machines 51, 52 can be determined, at least in part, by determining a torque alteration from operation of the electric machines 51, 52. The thrust associated with alteration of the working airflow path 54 corresponds to the altered pressure of the working airflow 55 that alters the amount of torque from the working airflow 55 that acts on the one or both of the LP and HP spools 25, 27. So, the thrust contribution from alteration of the working airflow path 54 can be determined, at least in part, by determining a torque alteration from altering of the working airflow path 54.

In some examples, block 304 can include, at block 350, the controller 210 determining a torque alteration from one or both of the electric machines 51, 52. If the changed thrust demand is an increased thrust demand (e.g., during a climb phase), the controller 210 can determine how much torque can be provided by one or both electric machines 51, 52 to the LP and HP spools 25, 27, such as in addition to a present amount of torque being provided by one or both electric machines 51, 52, if any. The amount of torque available from one or both electric machines 51, 52 can be determined according to a motor capacity of the electric machines 51, 52, a capacity of the electrical power source 120, a status of the electrical power source 120, an expected future torque demand, an expected futured electrical power available, or a combination thereof. For example, the amount of torque available can be less than or equal to the lowest of (i) a physical torque generation maximum of the electric machines 51, 52, (ii) the torque provided by the electric machines 51, 52 at a maximum electrical power output of the electrical power source 120, and (iii) the torque associated with a total amount of electrical power available from the electrical power source 120 (e.g., a battery state of charge). Additionally or alternatively, the amount of torque available may be limited according to expected torque demands for the electric machines 51, 52 according to a predetermined thrust schedule and the expected total amount of electrical power available from the electrical power source 120 according to an expected electrical power schedule. For example, the controller 210 can reserve at least some amount of available electric power for expected future flight activities (e.g., planned climbs over mountains), unexpected future flight activities (e.g., climbs over rough external air), or both.

If the altered thrust demand is a decreased thrust demand (e.g., in a descent phase), the controller 210 can determine how much torque can be absorbed by one or both electric machines 51, 52 from the LP and HP spools 25, 27, such as in addition to a present amount of torque being absorbed by one or both electric machines 51, 52, if any. The amount of torque absorption from one or both electric machines 51, 52 can be determined according to a generator capacity of the electric machines 51, 52, a capacity of the electrical power source 120, a status of the electrical power source 120, a status of the electrical loads 131, or a combination thereof. For example, the amount of torque absorption can be less than or equal to the lowest of (i) a physical torque absorption maximum of the electric machines 51, 52, (ii) the torque absorbed by the electric machines 51, 52 at a maximum electrical power input of the electrical power source 120, the electrical loads 131, or both, and (iii) the torque associated with a total amount of electrical power receivable by the electrical power source 120, the electrical loads 131, or both.

The thrust contribution associated with the alteration of the working airflow path 54 corresponds to the torque acting on one or both of the LP and HP spools 25, 27 by the working airflow 55. So, the thrust contribution associated with altering the working airflow path 54 can be determined, at least in part, by determining a torque alteration from altering the working airflow path 54. So, block 304 can further include, at block 352, the controller 210 determining a torque alteration from altering the working airflow path 54, such as via operation of the flow restrictor 57. For example, if the changed thrust demand is an increased thrust demand, the controller 210 can determine how much to increase the torque applied by the working airflow 55 to one or both of the LP and HP spools 25, 27, via increasing the flow resistance of the flow restrictor 57, to increase the thrust provided by the hybrid-electric gas turbine engine 10. If the altered thrust demand is a decreased thrust demand, the controller 210 can determine how much to reduce the torque demand applied by the working airflow 55 to one or both of the LP and HP spools 25, 27, via decreasing the flow resistance of the flow restrictor 57, to reduce the thrust provided by the hybrid-electric gas turbine engine 10.

In some instances, the controller 210 can limit the alterations to the torque applied to one or both of the LP and HP spools 25, 27 via altering the working airflow path 54 to match the torque alteration from operating one or both electric machines 51, 52 determined in block 350, or vice versa.

Block 304 can further include, in block 354, the controller 210 determining a thrust contribution for the combustor 30 (e.g., energy provided by the combustor 30 to the working airflow 55 that is utilized to generate thrust). In some instances, the controller 210 can determine the thrust alteration for the combustor 30 according to a difference between the change in thrust demand and the thrust alteration provided via the electric machines 51, 52 and the working airflow path alteration. For example, if the altered thrust demand is an increased thrust demand and the increased thrust provided by one or both electric machines 51, 52 and the working airflow path alteration is insufficient to meet the increased thrust demand, the controller 210 can determine an increased thrust contribution for the combustor 30 (e.g., above an existing thrust contribution) that will provide additional thrust such that the combined increased thrust from one or both of the electric machines 51, 52, the working airflow path modification, and the combustor 30 satisfies the increased thrust demand. If the increased thrust provided by one or both electric machines 51, 52 and the working airflow path alteration is sufficient to meet the increased thrust demand, the controller 210 may determine that the thrust contribution from the combustor 30 remains the same. For example, the controller 210 may not alter operation of the combustor 30, at least not for the purpose of meeting the increased thrust demand.

The controller 210 can determine the torque alterations of the electric machines 51, 52 in block 350, the working airflow path alteration in block 352, and the combustor thrust alteration in block 354 according to one or more thresholds. The thresholds can include a spool speed threshold, a spool speed rate of change threshold, or both, for one or both of the LP and HP spools 25, 27. For example, the controller 210 can determine the thrust contributions in block 304 to at least one of (i) maintain the speed of one or both of the LP and HP spools 25, 27 at or below a spool speed threshold, or (ii) limit a rate of change of the speed of one or both of the LP and HP spools 25, 27 to a rate of change threshold. Additionally or alternatively, the thresholds can include value thresholds, rate thresholds, or both, for fuel flow, flow path temperatures, flow path pressures, or a combination thereof.

The spool speed of the HP spool 27 during cruising (e.g., a cruising speed of the HP spool 27) can, in some configurations, be 90-95% of a maximum speed of the HP spool 27, and the spool speed threshold for the HP spool 27 can be equal to or between 95% and 105% of the cruising speed (e.g., between about 85% and 100% of the maximum speed). Additionally or alternatively, the spool speed of the LP spool 25 during cruising (e.g., a cruising speed of the LP spool 25) can, in some configurations, be 60-80% of a maximum speed of the LP spool 25, and the spool speed threshold for the LP spool 25 can be equal to or between 70% and 110% of the cruising speed (e.g., between about 42% and 88% of the maximum speed).

The spool speed rate of change threshold for the HP spool 27 can, for example, be 30% to 50%, inclusive of end points, of the maximum HP spool speed per minute. With a 50% threshold, the maximum rate of change would increase or decrease the present speed of the HP spool 27 by 50% in one minute, if maintained for a full minute, but acceleration events can be fractions of one minute. In some configurations, the spool speed rate of change threshold for the LP spool 25 can be the same as for the HP spool 27, but can be different from the HP spool 27.

The thresholds can limit the rates of speed changes and the total changes in speed of one or both of the LP and HP spools 25, 27, which can reduce wear and improve service life of one or both of the LP and HP spools 25, 27, and components affected thereby.

With some examples, the method 300 can include, at block 348, determining one or more thresholds, such as the spool speed thresholds and the spool speed rate of change thresholds. The controller 210 can, for example, determine the one or more thresholds, at least in part, according to (i) a maximum generator capacity of one or both of the electric machines 51, 52, (ii) a cyclic damage profile of one or both of the LP and HP spools 25, 27, and (iii) a status of one or more electrical loads 131 (e.g., battery state(s) of charge, present power consumption of other loads, etc.). For example, the controller 210 may determine the spool speed rate of change thresholds (e.g., determined rate of change thresholds) for deceleration (e.g., deceleration thresholds) of the LP and HP spools 25, 27 are less than or equal to a rate of change associated with the maximum generator capacity of the electric machines 51, 52, respectively, such that the electric machines 51, 52 can act as a drag on one or both of the LP and HP spools 25, 27 to cause the deceleration and absorb the torque associated therewith to generate electrical power. The cyclic damage profile can include a maximum value, a maximum rate of change, or both, of spool speed, flow path temperatures, flow path pressures, or a combination thereof. Total cyclic damage can be the sum of the cyclic damage from each cycle.

The controller 210 can, additionally or alternatively, determine the rate of change thresholds, at least in part, according to the cyclic damage profile of one or both of the LP and HP spools 25, 27. For example, the LP and HP spools 25, 27 may have respective maximum rates of change, such as based on material composition, and may have operation histories (e.g., recent speeds, rate changes, operating temperatures, etc.), and the controller 210 may determine the rate of change thresholds (e.g., determined rate of change thresholds) as less than or equal to the maximum rates of change. The controller 210 may determine the rate of change threshold is lower than the maximum rate of change threshold based on the operation history (e.g., if a spool recently accelerated, is operating at high speeds, is operating in higher temperatures, or a combination thereof).

The controller 210 can, additionally or alternatively, determine the rate of change thresholds to correspond to the status of the electrical loads 131. For example, the controller 210 can determine the rate of change threshold such that all electrical power generated by one or both of the electric machines 51, 52 can be consumed by the one or more electrical loads 131 (e.g., to charge batteries, operate electric devices, etc.). If the electrical loads 131 have a lower capacity for consumption (e.g., higher battery states of charge, fewer electric devices operating), the rate of change threshold can be lower, and vice versa. In some instances, the controller 210 can set the rate of change threshold to the lowest of the values associated with the maximum generator capacity, the cyclic damage profiles, and the electrical load status.

The controller 210 can determine the thrust contributions to alter thrust while maintaining speeds and rates of change of speeds within thresholds. For example, the controller 210 can determine the thrust contributions to decrease the thrust while maintaining a deceleration rate of a spool, such as the LP spool 25 or the HP spool 27, at or less than a deceleration threshold (e.g., as determined or obtained in block 348). Additionally or alternatively, the controller 210 can determine the thrust contributions to increase the thrust while maintaining an acceleration rate of a spool, such as the LP spool 25 or the HP spool 27, at or less than an acceleration threshold (e.g., as determined or obtained in block 348).

The method 300 includes, at block 306, altering the thrust generated by the hybrid-electric gas turbine engine 10. Block 306 can include, at block 370, altering the working airflow path 54 to alter the torque acting on one or both of the LP and HP spools 25, 27 from the working airflow 55 (e.g., altering a first spool torque and a second spool torque acting on the LP and HP spools, respectively). Altering the working airflow path 54 can include the controller 210 operating the flow restrictor 57, such as by opening, at least to some degree, the flow restrictor 57 to decrease the torque acting on one or both of the LP and HP spools 25, 27 and by closing, at least to some degree, the flow restrictor 57 to increase the torque acting on one or both of the LP and HP spools 25, 27. Opening the flow restrictor 57 can include closing one or more fan blades 42 (e.g., so the blades are closer to parallel to the circumferential direction), opening one or more vanes 74, 76, 86, 88, 98 (e.g., so the vanes are closer to perpendicular with the circumferential direction), opening the variable exhaust nozzle 45 (e.g., to increase the cross-sectional area of the variable exhaust opening 47), or a combination thereof, to reduce the flow resistance for and the pressure of the working airflow 55, which can reduce the torque acting on one or both of the LP and HP spools 25, 27. Closing the flow restrictor 57 can include opening one or more fan blades 42 (e.g., so the blades are closer to perpendicular to the circumferential direction), closing one or more vanes 74, 76, 86, 88, 98 (e.g., so the vanes are closer to parallel with the circumferential direction), closing the variable exhaust nozzle 45 (e.g., to decrease the cross-sectional area of the variable exhaust opening 47), or a combination thereof, to increase the flow resistance for and the pressure of the working airflow 55, which can increase the torque acting on one or both of the LP and HP spools 25, 27.

The method 300 includes, at block 372, operating one or both of the electric machines 51, 52 to at least partially compensate for the altered torque acting on one or both of the LP and HP spools 25, 27, such as according to the determination in block 350. For example, if the torque acting on one or both of the LP and HP spools 25, 27 is increased, the controller 210 can operate one or both electric machines 51, 52 in the motor mode to add torque to one or both of the LP and HP spools 25, 27. If the torque acting on one or both of the LP and HP spools 25, 27 is decreased, the controller 210 can operate one or both electric machines 51, 52 in the generator mode to absorb excess torque and provide electrical power to the one or more electrical loads 131. Absorbing the excess torque can include one or both electric machines 51, 52 increasing the torque acting on the spools 25, 27, and the torque increase can, for example, be within 50%, among other values (e.g., within 25%, within 10%, etc.) of the torque decrease provided by altering the working airflow path 54.

The method 300 can include, at block 374, altering operation of the combustor 30, such as according to the determination in block 354. For example, the controller 210 can control the one or more fuel control devices 205 to provide additional fuel to the combustor 30 to increase energy provided by the combustor 30 to increase thrust or provide less fuel to the combustor 30 to decrease energy provided by the combustor 30 to decrease thrust. For example, if the altered thrust demand is a decreased thrust demand, the controller 210 can control the one or more fuel control devices 205 to provide less fuel to decelerate one or both of the LP and HP spools 25, 27 at a rate up to the rate of change threshold, which may be predetermined or determined in block 348.

If the determination in block 354 is that the altered thrust demand is satisfied without altering operation of the combustor 30, block 374 may be omitted and operation of the combustor 30 may remain the same (e.g., not altered by the controller 210 for the purposes of responding to the altered thrust demand). While blocks 370-374 are illustrated sequentially, the order of blocks 370-374 can be modified and at least potions of two or more of blocks 370-374 can be carried out at the same time. For example, the controller 210 can alter the working airflow path 54, operate one or both electrical machines 51, 52, and alter combustor operation simultaneously.

It can be desirable to utilize the method 300 to limit transients when the engine 10 is operating outside of certain ranges, such as to a greater extent than when the engine 10 is operating within those certain ranges. For example, it may be desirable to utilize the method 300 to limit spool speed transients to a greater extent when the LP spool 25 is operating at or below 70% and at or above 95% of maximum speed, when the HP spool 27 is operating at or below 80% and at or above 105% of maximum speed, or both. The speeds of the LP spool 25 and the HP spool 27 can be correlated, so it may be desirable to utilize the method 300 when both the LP spool 25 and the HP spool 27 are operating below the ranges or above the ranges.

While FIG. 1 illustrates a ducted configuration of the hybrid-electric gas turbine engine 10 (e.g., a ducted engine), the hybrid-electric gas turbine engine 10 is not limited to the ducted configurations. For example, the hybrid-electric gas turbine engine 10 can include an un-ducted configuration (e.g., an un-ducted engine), which can include turbo-prop engines.

While examples are described with two spools, the LP and HP spools 25, 27, the hybrid-electric gas turbine engine 10 can include other numbers of spools, such as three spools, which can include, for example, the LP and HP spools 25, 27 and an intermediate spool (IP).

Hybrid-electric gas turbine engines employing the disclosed aspects can benefit from the control of speeds and rate of change of speeds of one or both of the HP spool or LP spool, fuel flow, flow path temperatures, and fluid pressures, which can limit total and maximum transient peaks in spool speeds, temperatures, and pressures, between takeoff and landing, reduce cyclic damage, and improve service life of the flow path and spool hardware and associated components exposed to these transients.

At least some aircraft can have flight profiles which are more complex than a standard take off, climb, cruise, descent, and land mission. Such complex profiles can include multiple climb and descent legs in the cruise portion of the mission. These additional climb and descent cycles can lead to multiple changes in speeds and temperatures for gas turbine engine components. The exposure to additional cycles in speed and temperature can lead to additional low cycle fatigue damage. For example, aircraft and aircraft engines utilized for complex flight profiles can experience increased fatigue damage for a given number of flight missions relative to aircraft and aircraft engines utilized with less complex flight profiles.

Methods and engines described herein can allow for the ability to extract, store, and reinject energy back into one or more shafts in an engine by utilizing one or more electric motors. Such methods can enable reducing or eliminating the exposure of various components to increased fatigue damage associated with complex flight profiles. The methods can enable the extraction of energy from the gas turbine core during the descent phase of the mission. For example, during the descent phase, energy extraction can allow the gas turbine rotor speeds and gas path temperatures to be maintained while thrust is lowered, such as by diverting energy to a battery, by operating a flow restrictor, or a combination thereof. The opposite approach can be applied during the climb phase where energy from the batteries is reinjected to generate thrust while gas turbine speeds and temperatures are maintained. Limiting maximum shaft speeds, differences between maximum and minimum shaft speeds (e.g., between peaks and valleys), and maximum rates of change of shaft speeds can limit cyclic damage to the shafts and components connected or proximate thereto.

Further aspects of the disclosure are provided by the subject matter of the following clauses:

A method of altering a thrust of a hybrid-electric gas turbine engine having a core including a compressor section, a combustor, a turbine section, and an exhaust section arranged to define a working airflow path, and with a spool defined by a set of compressor blades and a set of turbine blades coupled to a rotatable shaft, and an electric machine operably coupled to the rotatable shaft, the method comprising: operating a flow modulator to alter a pressure of a working airflow in the working airflow path to alter a torque acting on the spool, and operating the electric machine to at least partially compensate for the altered torque acting on the spool; wherein the thrust is altered while at least one of (i) maintaining a spool speed of the spool at or below a spool speed threshold or (ii) limiting a rate of change of the spool speed to a rate of change threshold.

The method of any preceding clause, wherein maintaining the spool speed at or below a spool speed threshold includes not altering the spool speed and torque from the electric machine fully compensating for the altered torque acting on the spool to alter the thrust.

The method of any preceding clause, wherein operating the flow modulator includes at least one of (i) altering a cross-sectional area of a variable exhaust nozzle of the exhaust section, or (ii) altering a pitch of a set of airfoils.

The method of any preceding clause, wherein the set of airfoils includes at least one of a set of vanes of the compressor section, a set of vanes of the turbine section, a set of blades of a fan section, or a set of outlet guide vanes.

The method of any preceding clause, wherein the spool is a high-pressure (HP) spool, and the spool speed threshold is equal to or between 95% and 105% of a cruising speed of the spool.

The method of any preceding clause, wherein the spool is a low-pressure (LP) spool, and the spool speed threshold is equal to or between 90% and 110% of a cruising speed of the spool.

The method of any preceding clause, wherein the rate of change threshold is equal to or between 0% and 50% of the spool speed per minute.

The method of any preceding clause, wherein the hybrid-electric gas turbine engine includes a second spool defined by a second set of compressor blades and a second set of turbine blades coupled to a second rotatable shaft, and a second electric machine coupled to the second spool; wherein operating the flow modulator alters a second spool torque acting on the second spool; and wherein altering the thrust generated by the hybrid-electric gas turbine engine includes: maintaining a second spool speed of the second spool at or below a second spool speed threshold while altering the thrust, and operating the second electric machine to at least partially compensate for the altered second spool torque acting on the second spool.

The method of any preceding clause, wherein the spool is a high-pressure (HP) spool, and the spool speed threshold is equal to or between 95% and 105% of a cruising speed of the spool; and wherein the second spool is a low-pressure (LP) spool, and the second spool speed threshold is equal to or between 70% and 110% of a cruising speed of the second spool.

The method of any preceding clause, wherein increasing the thrust provided by the hybrid-electric gas turbine engine includes increasing energy provided via the combustor by increasing fuel flow to the combustor.

The method of any preceding clause, wherein altering the thrust includes decreasing the thrust, the working airflow path is altered to decrease the pressure of the working airflow and decrease the torque acting on the spool, and the electric machine is operated to increase the torque acting on the spool.

The method of any preceding clause, wherein the torque increase provided by operation of the electric machine is within 50% of the torque decrease provided by altering the working airflow path.

The method of any preceding clause, comprising determining the rate of change threshold, at least in part, according to (i) a maximum generator capacity of the electric machine, (ii) a cyclic damage profile of the spool, and (iii) a status of one or more electrical loads.

The method of any preceding clause, wherein the cyclic damage profile of the spool includes a maximum rate of change; and wherein the determined rate of change threshold is less than the maximum rate of change threshold.

A hybrid-electric gas turbine engine, comprising: a core including a compressor having a set of compressor blades, a combustor, a turbine having a set of turbine blades, and an exhaust section, the core at least partially defining a fluid flow path for a working airflow; a spool defined by the set of compressor blades and the set of turbine blades coupled to a rotatable shaft; and an electric machine operably coupled to the rotatable shaft; a flow modulator disposed in the fluid flow path; and an electronic controller communicatively coupled with the electric machine and the flow modulator; wherein the electronic controller is configured to: alter a thrust generated by the hybrid-electric gas turbine engine, at least in part, by operating the flow modulator to alter a pressure of the working airflow, which alters a torque acting on the spool, operate the electric machine to at least partially compensate for the altered torque acting on the spool.

The hybrid-electric gas turbine engine of any preceding clause, wherein altering the thrust includes decreasing the thrust, and the electronic controller is configured to decrease the thrust by (i) operating the flow modulator to reduce the pressure of the working airflow, (ii) operating the electric machine to apply a drag to the spool, and (iii) decreasing an amount of fuel provided to the combustor; and wherein the electronic controller is configured to decrease the thrust while maintaining a deceleration rate of the spool at or less than a deceleration threshold.

The hybrid-electric gas turbine engine of any preceding clause, wherein altering the thrust includes increasing the thrust, and the electronic controller is configured to increase the thrust, at least in part, by (a) operating the flow modulator to increase the pressure of the working airflow, (b) operating the electric machine to increase an electric machine torque provided to the spool by the electric machine, and (c) increasing an amount of fuel provided to the combustor.

The hybrid-electric gas turbine engine of any preceding clause, wherein the flow modulator includes at least one of a variable exhaust nozzle disposed in the exhaust section or a variable compressor vane of the compressor.

The hybrid-electric gas turbine engine of any preceding clause, wherein the hybrid-electric gas turbine engine includes a ducted configuration, an un-ducted configuration, or a turbo-prop engine.

The hybrid-electric gas turbine engine of any preceding clause, further comprising: a second spool defined by a second set of compressor blades and a second set of turbine blades coupled to a second rotatable shaft; and a second electric machine operably coupled to the second rotatable shaft; wherein the electronic controller is configured to operate the electric machine to extract torque from the spool while operating the second electric machine to add torque to the second spool.

The method of any preceding clause, wherein the spool is an HP spool or an LP spool.

The method of any preceding clause, wherein the engine includes two spools.

The method of any preceding clause, wherein the engine includes more than two spools.

The method of any preceding clause, wherein the engine includes three spools.

The method of any preceding clause, wherein the cyclic damage profile includes a maximum value or rate of change for flow path temperatures or pressures.

A method of operating a hybrid-electric gas turbine engine having a core including a compressor section, a combustor, a turbine section, and an exhaust section arranged to define a working airflow path, and with a spool defined by a set of compressor blades and a set of turbine blades coupled to a rotatable shaft, and an electric machine operably coupled to the rotatable shaft, the method comprising: altering a thrust generated by the hybrid-electric gas turbine engine, at least in part, by: altering at least one of (i) fuel flow to the combustor, or (ii) the working airflow path, to alter a pressure of a working airflow in the working airflow path to alter a torque acting on the spool, and operating the electric machine to at least partially compensate for the altered torque acting on the spool; wherein the thrust is altered while at least one of (i) maintaining a spool speed of the spool at or below a spool speed threshold or (ii) limiting a rate of change of the spool speed to a rate of change threshold.

A hybrid-electric gas turbine engine, comprising: a core including a compressor having a set of compressor blades, a combustor, a turbine having a set of turbine blades, and an exhaust section, the core at least partially defining a fluid flow path for a working airflow; a spool defined by the set of compressor blades and the set of turbine blades coupled to a rotatable shaft; and an electric machine operably coupled to the rotatable shaft; a flow modulator disposed in the fluid flow path; and an electronic controller communicatively coupled with the electric machine and the flow modulator; wherein the electronic controller is configured to: alter a thrust generated by the hybrid-electric gas turbine engine, at least in part, by at least one of (i) altering fuel flow to the combustor, or (ii) operating the flow modulator to alter a pressure of the working airflow, which alters a torque acting on the spool, operate the electric machine to at least partially compensate for the altered torque acting on the spool.

The hybrid-electric gas turbine engine, wherein the electronic controller is configured to alter the thrust generated by the hybrid-electric gas turbine engine, at least in part, by (i) altering fuel flow to the combustor and (ii) operating the flow modulator to alter the pressure of the working airflow.

An electronic controller comprising a process and a memory, the electronic controller configuration to conduct the method of any preceding clause.

A non-transitory computer readable medium comprising instructions that, when executed, cause a processor to conduct the method of any preceding clause.

A method of altering a thrust of a hybrid-electric gas turbine engine having a core including a compressor, a combustor, a turbine, and an exhaust section arranged to define a working airflow path, and with a spool defined by a set of compressor blades and a set of turbine blades coupled to a rotatable shaft, and an electric machine operably coupled to the rotatable shaft, the method comprising: altering the working airflow path to alter a pressure of a working airflow in the working airflow path to alter a torque acting on the spool, and operating the electric machine to at least partially compensate for the altered torque acting on the spool; wherein the thrust is altered while at least one of (i) maintaining a spool speed of the spool at or below a spool speed threshold or (ii) limiting a rate of change of the spool speed to a rate of change threshold.

The method of any preceding clause, wherein maintaining the spool speed at or below a spool speed threshold includes not altering the spool speed and torque from the electric machine fully compensating for the altered torque acting on the spool to alter the thrust.

The method of any preceding clause, wherein altering the working airflow path includes at least one of (i) altering a cross-sectional area of a variable exhaust nozzle of the exhaust section, or (ii) altering a pitch of a set of airfoils.

The method of any preceding clause, wherein the set of airfoils includes at least one of a set of vanes of the compressor, a set of vanes of the turbine, a set of blades of a fan section of the core, or a set of outlet guide vanes.

The method of any preceding clause, wherein the spool is a high-pressure (HP) spool and the spool speed threshold is equal to or between 95% and 105% of a cruising speed of the spool.

The method of any preceding clause, wherein the spool is a low-pressure (LP) spool and the spool speed threshold is equal to or between 90% and 110% of a cruising speed of the spool.

The method of any preceding clause, wherein the rate of change threshold is equal to or between 0% and 50% of the spool speed per minute.

The method of any preceding clause, wherein the hybrid-electric gas turbine engine includes a second spool defined by a second set of compressor blades and a second set of turbine blades coupled to a second rotatable shaft, and a second electric machine coupled to the second spool; wherein altering the working airflow path alters a second spool torque acting on the second spool; and wherein altering the thrust generated by the hybrid-electric gas turbine engine includes: maintaining a second spool speed of the second spool at or below a second spool speed threshold while altering the thrust, and operating the second electric machine to at least partially compensate for the altered second spool torque acting on the second spool.

The method of any preceding clause, wherein the spool is a high-pressure (HP) spool and the spool speed threshold is equal to or between 95% and 105% of a cruising speed of the spool; and wherein the second spool is a low-pressure (LP) spool and the second spool speed threshold is equal to or between 70% and 110% of a cruising speed of the second spool.

The method of any preceding clause, wherein increasing the thrust provided by the hybrid-electric gas turbine engine includes increasing energy provided via the combustor by increasing fuel flow to the combustor.

The method of any preceding clause, wherein altering the thrust includes decreasing the thrust, the working airflow path is altered to decrease the pressure of the working airflow and decrease the torque acting on the spool, and the electric machine is operated to increase the torque acting on the spool.

The method of any preceding clause, wherein the torque increase provided by operation of the electric machine is within 50% of the torque decrease provided by altering the working airflow path.

The method of any preceding clause, comprising determining the rate of change threshold, at least in part, according to (i) a maximum generator capacity of the electric machine, (ii) a cyclic damage profile of the spool, and (iii) a status of one or more electrical loads.

The method of any preceding clause, wherein the cyclic damage profile of the spool includes a maximum rate of change; and wherein the determined rate of change threshold is less than the maximum rate of change threshold.

A hybrid-electric gas turbine engine, comprising: a core including a compressor having a set of compressor blades, a combustor, a turbine having a set of turbine blades, and an exhaust section, the core at least partially defining a fluid flow path for a working airflow; a spool defined by the set of compressor blades and the set of turbine blades coupled to a rotatable shaft; and an electric machine operably coupled to the rotatable shaft; a flow restrictor disposed in the fluid flow path; and an electronic controller communicatively coupled with the electric machine and the flow restrictor; wherein the electronic controller is configured to: alter a thrust generated by the hybrid-electric gas turbine engine, at least in part, by operating the flow restrictor to alter a pressure of the working airflow, which alters a torque acting on the spool, operate the electric machine to at least partially compensate for the altered torque acting on the spool.

The hybrid-electric gas turbine engine of any preceding clause, wherein altering the thrust includes decreasing the thrust, and the electronic controller is configured to decrease the thrust by (i) operating the flow restrictor to reduce the pressure of the working airflow, (ii) operating the electric machine to apply a drag to the spool, and (iii) decreasing an amount of fuel provided to the combustor; and wherein the electronic controller is configured to decrease the thrust while maintaining a deceleration rate of the spool at or less than a deceleration threshold.

The hybrid-electric gas turbine engine of any preceding clause, wherein altering the thrust includes increasing the thrust, and the electronic controller is configured to increase the thrust, at least in part, by (a) operating the flow restrictor to increase the pressure of the working airflow, (b) operating the electric machine to increase an electric machine torque provided to the spool by the electric machine, and (c) increasing an amount of fuel provided to the combustor.

The hybrid-electric gas turbine engine of any preceding clause, wherein the flow restrictor includes at least one of a variable exhaust nozzle disposed in the exhaust section or a variable compressor vane of the compressor.

The hybrid-electric gas turbine engine of any preceding clause, wherein the hybrid-electric gas turbine engine includes a ducted configuration, an un-ducted configuration, or a turbo-prop engine.

The hybrid-electric gas turbine engine of any preceding clause, further comprising: a second spool defined by a second set of compressor blades and a second set of turbine blades coupled to a second rotatable shaft; and a second electric machine operably coupled to the second rotatable shaft; wherein the electronic controller is configured to operate the electric machine to extract torque from the spool while operating the second electric machine to add torque to the second spool.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method (300) of altering a thrust of a hybrid-electric gas turbine engine (10) including a compressor section (22), a combustor (30), a turbine section (32), and an exhaust section (37) arranged to define a working airflow path (54), and with a spool (25, 27) defined by a set of compressor blades (70, 72) and a set of turbine blades (82, 84) coupled to a rotatable shaft (48, 56), and an electric machine (51, 52) operably coupled to the rotatable shaft (48, 56), the method (300) comprising:
operating a flow modulator (57) to alter a pressure of a working airflow in the working airflow path (54) to alter a torque acting on the spool (25, 27), and
operating the electric machine (51, 52) to at least partially compensate for the altered torque acting on the spool (25, 27);
wherein the thrust is altered while at least one of (i) maintaining a spool speed of the spool (25, 27) at or below a spool speed threshold or (ii) limiting a rate of change of the spool speed to a rate of change threshold.

2. The method (300) of claim 1, wherein maintaining the spool speed at or below a spool speed threshold includes not altering the spool speed and torque from the electric machine (51, 52) fully compensating for the altered torque acting on the spool (25, 27) to alter the thrust.

3. The method (300) of any preceding claim, wherein operating the flow modulator (57) includes at least one of (i) altering a cross-sectional area of a variable exhaust nozzle (45) of the exhaust section (37), or (ii) altering a pitch of a set of airfoils (42, 70, 72, 74, 76, 82, 84, 86, 88, 98).

4. The method (300) of claim 3, wherein the set of airfoils (42, 70, 72, 74, 76, 82, 84, 86, 88, 98) includes at least one of a set of vanes (74, 76) of the compressor section (22), a set of vanes (86, 88) of the turbine section (32), a set of blades (42) of a fan section (18), or a set of outlet guide vanes (98).

5. The method (300) of any preceding claim, wherein the spool (25, 27) is a high-pressure (HP) spool (27), and the spool speed threshold is equal to or between 95% and 105% of a cruising speed of the spool (27).

6. The method (300) of any preceding claim, wherein the spool (25, 27) is a low-pressure (LP) spool (25), and the spool speed threshold is equal to or between 90% and 110% of a cruising speed of the spool (25).

7. The method (300) of any preceding claim, wherein the rate of change threshold is equal to or between 0% and 50% of the spool speed per minute.

8. The method (300) of any preceding claim, wherein the hybrid-electric gas turbine engine (10) includes a second spool (25, 27) defined by a second set of compressor blades (70, 72) and a second set of turbine blades (82, 84) coupled to a second rotatable shaft (48, 56), and a second electric machine (51, 52) coupled to the second spool (25, 27);
wherein operating the flow modulator (57) alters a second spool torque acting on the second spool (25, 27); and
wherein altering the thrust generated by the hybrid-electric gas turbine engine (10) includes:
maintaining a second spool speed of the second spool (25, 27) at or below a second spool speed threshold while altering the thrust, and
operating the second electric machine (51, 52) to at least partially compensate for the altered second spool torque acting on the second spool (25, 27).

9. The method (300) of claim 8, wherein the spool (25, 27) is a high-pressure (HP) spool (27), and the spool speed threshold is equal to or between 95% and 105% of a cruising speed of the spool (27); and
wherein the second spool (25, 27) is a low-pressure (LP) spool (25), and the second spool speed threshold is equal to or between 70% and 110% of a cruising speed of the second spool (25).

10. The method (300) of claim 8 or 9, wherein increasing the thrust provided by the hybrid-electric gas turbine engine (10) includes increasing energy provided via the combustor (30) by increasing fuel flow to the combustor (30).

11. The method (300) of any preceding claim, wherein altering the thrust includes decreasing the thrust, the working airflow path (54) is altered to decrease the pressure of the working airflow and decrease the torque acting on the spool (25, 27), and the electric machine (51, 52) is operated to increase the torque acting on the spool (25, 27).

12. The method (300) of claim 11, wherein the torque increase provided by operation of the electric machine (51, 52) is within 50% of the torque decrease provided by altering the working airflow path (54).

13. The method (300) of any preceding claim, comprising determining the rate of change threshold, at least in part, according to (i) a maximum generator capacity of the electric machine (51, 52), (ii) a cyclic damage profile of the spool (25, 27), and (iii) a status of one or more electrical loads (131).

14. The method (300) of claim 13, wherein the cyclic damage profile of the spool (25, 27) includes a maximum rate of change.

15. The method (300) of claim 14, wherein the determined rate of change threshold is less than the maximum rate of change threshold.
